# FASCICULE DE BREVET EUROPEEN

(11) **EP 0 375 496 B1**
(45) Date de publication et mention de la délivrance du brevet: **22.09.1993**
(21) Numéro de dépôt: 89403387.7
(22) Date de dépôt: 06.12.1989
(51) Int. Cl.: B64G 1/24, G05D 1/08

(54) **Procédé de détermination et de contrôle de l'attitude d'un satellite stabilisé par autorotation sur une orbite elliptique de transfert**
System zur Bestimmung und Steuerung der Lage eines sich drehenden stabilisierten Satelliten auf einer elliptischen Transferbahn
Attitude determination and control system for a spin-stabilized satellite in an elliptic transfer orbit

(30) Priorité: 23.12.1988 FR 8817120
(43) Date de publication de la demande: 27.06.1990
(73) Titulaire: AEROSPATIALE Société Nationale Industrielle, 75781 Paris Cédex 16 (FR)
(72) Inventeur: Maute, Patrick Aimé Alexandre, F-06560 Valbonne (FR)
(74) Mandataire: Rinuy, Santarelli

(56) Documents cités:
- EP-A- 0 209 429
- FR-A- 2 373 823
- JOURNAL OF GUIDANCE, CONTROL AND DYNAMICS, vol. 9, no. 2, mars-avril 1986, pages 156-163, Broadway, New York, US; J.C. VAN DER HA: "Attitude determination covariance analysis for geostationary transfer orbits"

## Description

L'invention concerne la détermination et le contrôle de l'attitude d'un satellite stabilisé par autorotation (en anglais "spinné"), préalablement à son passage d'une orbite elliptique de transfert à une orbite circulaire géostationnaire, lors d une manoeuvre dite manoeuvre d'apogée.

De façon connue les opérations permettant d'amener un satellite en une orbite géostationnaire commencent par le lancement, à partir du sol, d'un lanceur, ARIANE par exemple, adapté à injecter le satellite sur une orbite elliptique de transfert dont le périgée a une attitude de l'ordre de 200 km et dont l'apogée atteint sensiblement l'altitude de l'orbite géostationnaire visée (de l'ordre de 36.000 kilomètres). Ensuite, lors d'un passage du satellite à l'apogée de cette orbite de transfert, on commande une manoeuvre d'apogée au cours de laquelle le satellite subit, sous l'action d'un moteur d'apogée dont il est muni, une impulsion de poussée d'orientation et d'amplitude propres à l'amener sensiblement sur son orbite géostationnaire.

Actuellement on distingue en pratique deux types de procédures de lancement selon que, en orbite de transfert, le satellite est stabilisé 3-axes sur son orbite, ou qu'il tourne sur lui-même autour d un axe qui lui est lié (en pratique autour de l'axe de poussée de son moteur d'apogée, ainsi que cela est décrit par le document FR-2.373.823).

Dans le premier cas, l'orientation (ou attitude) du satellite est maintenue constante, ce qui implique des manoeuvres fréquentes de correction d'attitude.

Dans le deuxième cas, qui est celui que considère l'invention, l'orientation dans l espace de l'axe de rotation du satellite (on parle ici aussi de "l'attitude" du satellite tournant) varie peu le long de l'orbite de transfert. En pratique, lors même du largage du satellite par le lanceur, on cherche déjà à approcher autant que possible l'orientation (ou attitude) souhaitée pour la mise à feu du moteur d'apogée et seules de faibles corrections d'attitude auront ensuite lieu, pendant le parcours par le satellite de son orbite de transfert, pour ajuster de façon fine l'attitude réelle à l'attitude souhaitée.

Il est à noter que cette orientation de l'axe de poussée est sensiblement perpendiculaire au grand axe de l'orbite elliptique de transfert.

On comprend aisément que l'injection du satellite sur son orbite géostationnaire ne peut se faire de manière correcte que si, préalablement à la manoeuvre d'apogée, l'axe de poussée a été amené de façon précise dans l'orientation voulue, faute de quoi des corrections ultérieures consommatrices d'ergols seront nécessaires pour rattraper tant bien que mal l'orbite voulue, ce qui réduira la quantité résiduelle d'ergols et donc la durée de vie utile du satellite.

De façon connue la détermination de l'orientation dans l'espace de l'axe de poussée (et donc de l'attitude du satellite) se fait à l'aide d'un ensemble de détecteurs terrestres et solaires disposés sur le satellite selon un agencement approprié tandis que le contrôle et l'ajustement de cette orientation sont réalisés par des tuyères de poussée dont le satellite est doté.

En fait les détecteurs solaires et terrestres fournissent des mesures d'écart angulaire entre les directions sous lesquelles ils "voient" le Soleil ou la Terre, respectivement, et des directions de référence liées à ces détecteurs. La détermination de l'orientation dans l'espace d'un axe tel que l'axe de poussée se fait ensuite, après reconnaissance préliminaire du plan satellite-Terre-Soleil.

Les détecteurs solaires sont adaptés à fournir successivement des mesures tout au long de l'orbite de transfert, sauf pendant les périodes d'éclipse ; comme celles-ci sont de durée limitée et correspondent en général a des zones au voisinage du périgée, elles ne sont pas gênantes.

Les détecteurs terrestres, quant à eux, de par leur positionnement sur le satellite par rapport à l'axe de poussée et de par l'étroitesse de leur champ de vision, (± 1° environ), ne sont adaptés, à moins de prévoir des miroirs de renvoi escamotables comme dans le document FR-2.373.823, à fournir des mesures que sur une partie limitée de l'orbite de transfert, au voisinage de l'apogée (ainsi qu'au voisinage du périgée), là où le champ de vision de ces détecteurs terrestres intercepte effectivement la Terre compte tenu de l'orientation dans l'espace de l'axe de rotation du satellite (perpendiculaire au grand axe de l'orbite).

Une difficulté importante dans l'ajustement de l'attitude du satellite tournant, au moment de déclencher la manoeuvre d'apogée, qui notamment n'est pas prise en compte dans le document FR-2.373.823, provient de ce que le plus souvent le satellite se trouve alors très près d'une ligne fictive reliant la Terre et le Soleil. Il en résulte une imprécision notable sur la détermination du plan satellite-Terre-Soleil et donc sur la détermination de l'orientation de l'axe de poussée. Pour de plus amples informations sur les causes d'incertitude, on peut se référer à JOURNAL OF GUIDANGE, CONTROL ANS DYNAMICS, vol. 9, n° 2, Mars-AVril 1986, pp 156-163 - Broadway, New-York US ; J.C. VAN DER HA.

Ce quasi-alignement du satellite entre la Terre et le Soleil au moment de la manoeuvre d'apogée découle de ce que les exigences des clients propriétaires des satellites à lancer imposent, pour la plupart des lanceurs existant actuellement, surtout lorsque ceux-ci sont destinés à effectuer des doubles lancements de satellites, des fenêtres de lancement très étroites situées le plus souvent autour de minuit en temps universel. Ainsi, par exemple, pour le lanceur ARIANE, cette fenêtre de lancement est de 45 minutes et, selon la date du lancement dans l'année, elle se termine à une heure comprise entre 23 h 35 et 0 h 20.

La détermination de l'attitude d'un satellite tournant avant la manoeuvre d'apogée ne peut donc actuellement être effectuée qu'à proximité immédiate de l'apogée (compte tenu du positionnement des détecteurs terrestres), dans une configuration satellite-Terre-Soleil défavorable à une bonne précision de mesure (compte tenu des fenêtres de lancement).

Cet état de fait a amené à proposer plusieurs compromis ou palliatifs :
- obtenir une dérogation quant aux procédures de lancement de façon à éviter les périodes de l'année où les contraintes de fenêtres de lancement sont les plus gênantes (équinoxes) ; il en résulte une dégradation considérable de la flexibilité d'utilisation du lanceur ;
- accepter une mauvaise précision de détermination d'attitude au moment de la manoeuvre d'apogée, mais cela se paye par une réduction de la durée de vie utile du satellite ;
- doter le satellite de détecteurs terrestres supplémentaires positionnés en sorte de pouvoir intercepter la Terre dans leur champ de vision ailleurs qu'à l'apogée de l'orbite de transfert ; comme ces détecteurs terrestres supplémentaires ne sont utilisés qu'en phase de transfert ils impliquent une pénalité en coût et en masse sans utilité pendant la durée de vie utile.

L'invention a pour objet de pallier ces inconvénients en permettant une détermination précise de l'attitude d'un satellite stabilisé par autorotation avant la manoeuvre d'apogée, sans pénalité substantielle ni en poids ni en coût, ni en durée de vie utile pour ce satellite.

Elle propose à cet effet un procédé de détermination et de contrôle de l'attitude d'un satellite muni de tuyères de correction d'attitude et de détecteurs terrestres et solaires, stabilisé par autorotation autour d'un axe V-V, préalablement à son passage d'une orbite elliptique de transfert à une orbite circulaire géostationnaire lors d'une manoeuvre d'apogée, cette attitude étant définie par rapport à un repère inertiel X Y Z dont l'axe Z est dirigé vers le Nord géographique, par une déclinaison α entre l'axe V-V et le plan X Y et par une ascension droite β entre la projection de l'axe V-V dans le plan X Y et l'axe X, caractérisé en ce que, après l'injection du satellite par un lanceur sur l'orbite de transfert au périgée de celle-ci, avec une attitude initiale proche d'une attitude finale prédéterminée visée par la manoeuvre d'apogée :
- on calibre les tuyères dans une position orbitale décalée de l'apogée à l'aide des détecteurs solaires et terrestres en sorte de savoir ensuite modifier l'ascension droite β sans perturber la déclinaison α,
- on modifie (C) l'ascension droite β du satellite en sorte de lui donner une attitude intermédiaire telle que le champ de vision des détecteurs terrestres vienne intercepter la Terre pour une position du satellite sur l'orbite de transfert décalée d'au moins 10 degrés par rapport à l'apogée,
- on mesure la déclinaison α de l'axe de rotation du satellite, puis on l'ajuste (C') à la valeur souhaitée pour la manoeuvre d'apogée,
- en maintenant cette déclinaison constante compte tenu de l'étape de calibration, on ajuste (D) l'ascension droite à partir des mesures des détecteurs solaires en sorte d'amener le satellite dans son attitude finale, et
- on commande la manoeuvre d'apogée.

L'invention est fondée sur la remarque préliminaire selon laquelle la précision sur la détermination de la déclinaison a se dégrade à l'approche de l'alignement Terre-Satellite-Soleil, tandis que la détermination de l'ascension droite β est possible en utilisant uniquement les mesures des détecteurs solaires. Grâce au passage dans l'attitude intermédiaire précitée, il devient possible, grâce à l'invention de mesurer la déclinaison avec précision, puisque les mesures des détecteurs terrestres sont obtenues sur une partie de l'orbite où il n'y a pas alignement du Satellite avec la Terre et le Soleil.

Selon les dispositions préférées de l'invention, éventuellement combinées :
- l'écart d'ascension droite β entre l'attitude initiale et l'attitude intermédiaire est compris entre 0-1° et 20°, de préférence voisin de 10 ;
- dans l'attitude intermédiaire, la position du satellite, lorsque ledit champ de vision des détecteurs terrestres intercepte la Terre, se trouve en avance de 10 à 30° environ sur l'apogée.
- la manoeuvre d'apogée étant prévue pour le 4è passage du satellite à l'apogée, on amène le satellite dans son attitude intermédiaire (C) avant le second passage du satellite à l'apogée de son orbite de transfert.
- on amène (C) le satellite dans son attitude intermédiaire en une position du satellite sur son orbite située entre 170° et 10° environ en avance sur l'apogée.
- on ajuste (C') la déclinaison α du satellite en une position située entre 10 et 30° avant l'apogée.
- la manoeuvre d'apogée étant prévue lors du 4è passage à l'apogée, on ajuste (C') cette déclinaison avant le second passage du satellite à l'apogée.
- on amène (D) le satellite dans son attitude finale en une position de celui-ci sur l'orbite de transfert située entre 10 et 30° avant l'apogée.
- la manoeuvre d'apogée étant prévue pour le 4è passage à l'apogée, on amène (D) le satellite dans son attitude finale avant le 3è passage du satellite à l'apogée.
- la manoeuvre d'apogée étant prévue pour le 4è passage du satellite à l'apogée, on commande (E) un ajustement ultime de l'ascension droite β entre 30° et 10° avant ce 4è passage.

Des objets, caractéristiques et avantages de l'invention ressortent de la description qui suit, donnée à titre d'exemple non limitatif, en regard des dessins annexés sur lesquels :
- la figure 1 est une vue schématique en perspective d'un satellite stabilisé par autorotation sur une orbite de transfert, muni de détecteurs terrestres et solaires et de tuyères propres à permettre la mise en oeuvre de l'invention ;
- la figure 2 représente la position de l'axe de rotation de ce satellite dans un repère d'orientation fixe dans l'espace ;
- la figure 3 est une vue schématique partielle de la disposition des tuyères de réorientation du satellite de la figure 1 ;
- les figures 4A et 4B sont deux représentations géométriques simplifiées en perspective de ce satellite, correspondant respectivement aux poussées axiales et radiales lors d'une manoeuvre de basculement d'attitude ;
- les figures 5A et 5B en sont deux projections dans un plan perpendiculaire à l'axe de rotation ;
- les figures 6A à 6D sont quatre vues de l'orbite de transfert faisant apparaître des étapes successives du procédé de l'invention au cours de 3,5 révolutions effectuées par le satellite tournant entre le largage par le lanceur, et la manoeuvre d'apogée ; et
- la figure 7 est un graphique (déclinaison/ascension droite) correspondant aux principales étapes du procédé de l'invention.

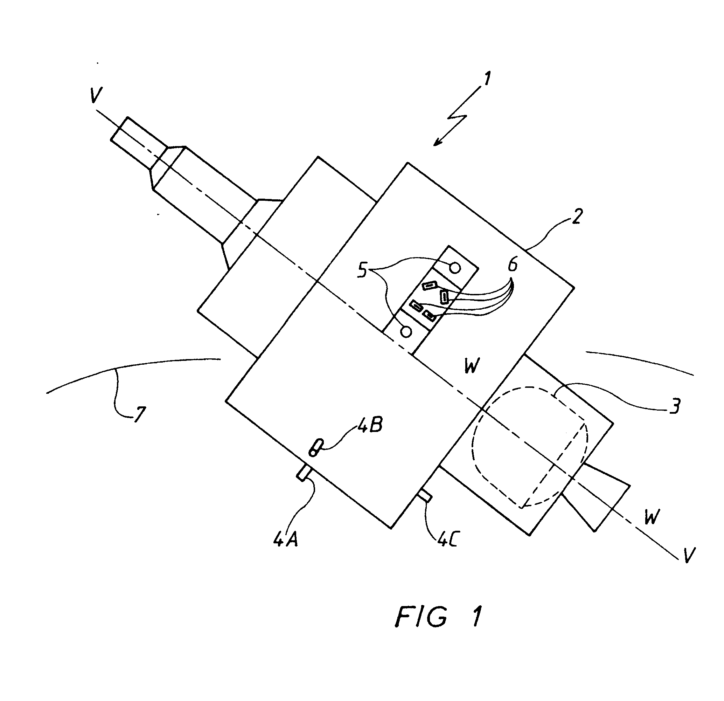

Le satellite stabilisé par autorotation 1 de la figure 1 comporte, de façon connue, un corps 2 tournant de façon continue, avec une vitesse de rotation ω , autour d'un axe de rotation V-V avantageusement confondu avec un axe principal longitudinal d'inertie de ce corps 2.

Ce corps 2 est muni d'un moteur d'apogée 3 dont l'axe de poussée W-W est confondu avec cet axe de rotation V-V.

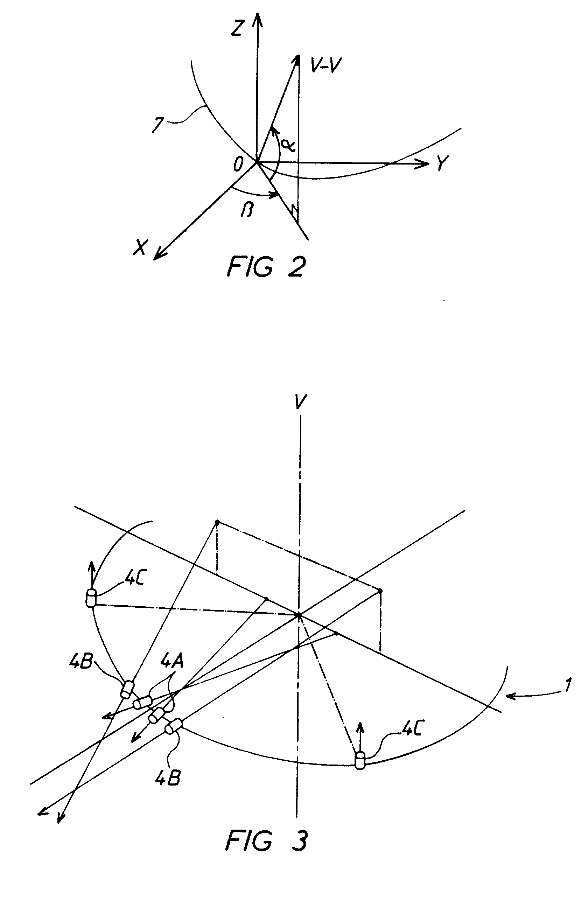

Sur ce corps 2 sont en outre prévus, selon une disposition géométrique connue en soi, des tuyères 4 de correction d'attitude (voir la figure 3) adaptées à appliquer au satellite, soit des poussées principalement latérales en ce qui concerne les tuyères à poussée radiale 4A et les tuyères à poussée de vernier 4B, soit des poussées axiales en ce qui concerne les tuyères axiales 4C.

Ce corps 2 est en outre doté d'une pluralité de détecteurs terrestres 5 et solaires 6, disposés selon une disposition connue en soi, adaptés chacun à fournir une mesure de l'écart angulaire existant entre la direction suivant laquelle il "voit" la Terre ou le Soleil, respectivement, et une direction de référence propre audit lu détecteur.

Le satellite 1 décrit une orbite de transfert schématisée en 7.

La figure 2 représente un repère inertiel OXYZ orthogonal, d'orientation fixe dans l'espace dont l'axe OZ est orienté vers le Nord géographique. L'orientation des axes OX et OY est définie par une convention arbitrairement choisie. De façon courante le plan OXY est confondu avec le plan équatorial de la Terre.

On appelle "déclinaison" l'angle α que fait dans ce repère l'axe de rotation V-V avec le plan OXY, et "ascension droite" l'angle β que fait la projection de cet axe V-V dans le plan OXY avec l'axe OX.

A la figure 2, pour des raisons de lisibilité, on a représenté le repère XYZ en plaçant le point O à l'apogée de l'orbite de transfert 7 du satellite 1.

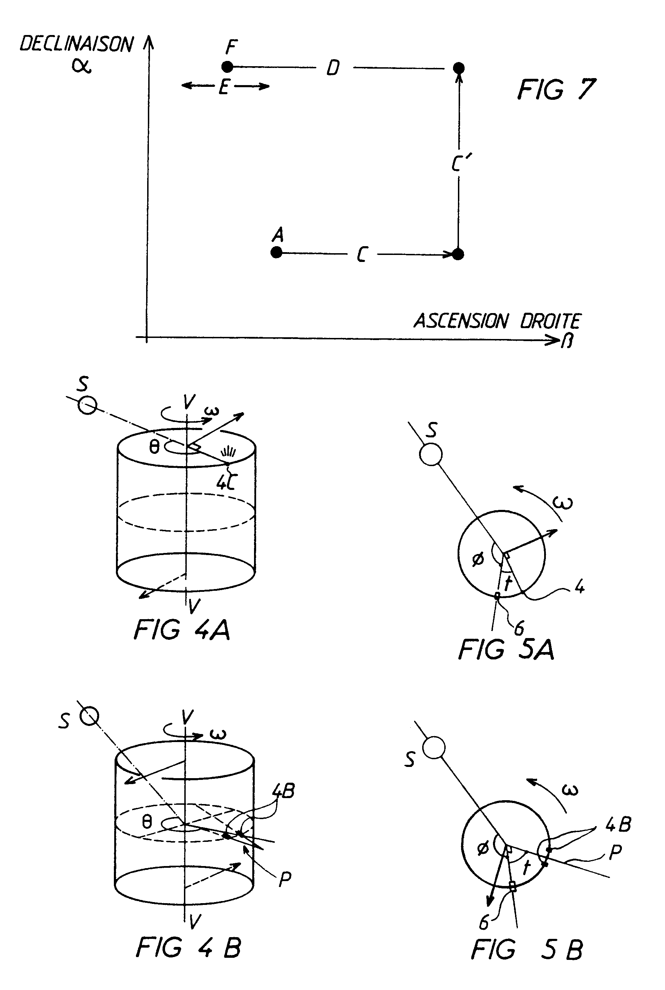

Les figures 4A, 4B, 5A et 5B représentent une opération de basculement de l'axe de rotation V-V du satellite, sous l'action de certaines 4B et 4C des tuyères de correction 4.

Sur ces figures on a reporté l'axe V-V, le soleil S, un angle Θ qui représente la phase angulaire entre la direction du soleil et la direction où sont effectuées les impulsions de poussée par les tuyères de réorientation 4B ou 4C, un angle φ qui représente le décalage angulaire de l'axe de la tuyère considérée entre le début d'une impulsion de poussée et le moment où un top "solaire" est donné par le détecteur solaire 6 (passage de ce dernier en regard du soleil). Les flèches radiales représentent la direction du basculement de l'axe V-V et t représente l'angle (tuyère - détecteur solaire).

La configuration des figures 4A et 4B est obtenue lorsqu'une poussée axiale est appliquée tandis que celle des figures 4B et 5B est obtenue lorsque des poussées latérales sont appliquées en P par les tuyères de vernier 4B.

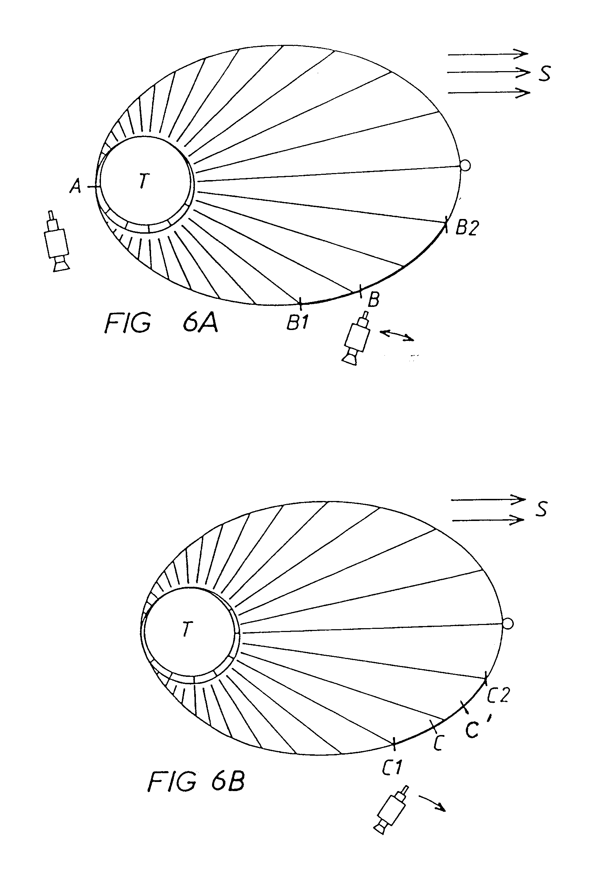

Les figures 6A à 6D représentent les phases successives de contrôle et de détermination de l'attitude du satellite tournant 1 au cours de 3,5 révolutions (nombre typique correspondant à une mise à feu au 4è apogée) qu'il effectue entre son largage et la manoeuvre d'apogée.

Sur chacune de ces figures sont représentés l'orbite de transfert 7, la direction du Soleil S, la Terre T et des rayons centrés sur la Terre qui définissent une graduation angulaire de 10° en 10°. Diverses étapes successives dans la détermination et le contrôle de l'attitude du satellite 1 sont repérées sur l'orbite 7 par des lettres prises par ordre alphabétique, et une schématisation du satellite est associée à plusieurs de celles-ci pour symboliser l'étape associée.

En A, le satellite est injecté par le lanceur sur l'orbite de transfert 7, au périgée de celle-ci, approximativement dans l'attitude souhaitée pour la manoeuvre d'apogée.

En un point B du segment B1-B2, ici choisi au cours de la première demi-révolution (voir figure 6A), on effectue une calibration des diverses tuyères 4 destinées à intervenir par la suite pour modifier l'orientation de l'axe de rotation V-V. Cette calibration est faite en modifiant l'ascension droite de cet axe V-V, puis en en effectuant une modification contraire : on compare le basculement réel, mesuré à l'aide des senseurs solaires 6, à sa valeur théorique visée.

En un point C d'un segment C1-C2, ici choisi au cours de la seconde orbite de transfert (voir figure 6B), on commande un basculement de l'axe V-V dans une attitude intermédiaire prédéterminée, préalablement choisie comme étant propice à une détermination précise de la déclinaison α de l'axe V-V. Ce changement d'attitude (voir figure 7) correspond à une simple variation d'ascension droite β, par rotation autour de l'axe OZ.

Dans cette attitude intermédiaire, les senseurs terrestres 5 interceptent la Terre tout au long du segment C-C2. Comme ce segment est décalé par rapport à l'apogée, les senseurs terrestres et solaires peuvent mesurer précisément la déclinaison α, en restant à l'écart de l'alignement Terre-Satellite-Soleil. Ensuite, en un point C' de ce segment C-C2, on commande une correction de cette déclinaison (voir figure 7) en sorte de l'amener à la valeur voulue pour la manoeuvre d'apogée.

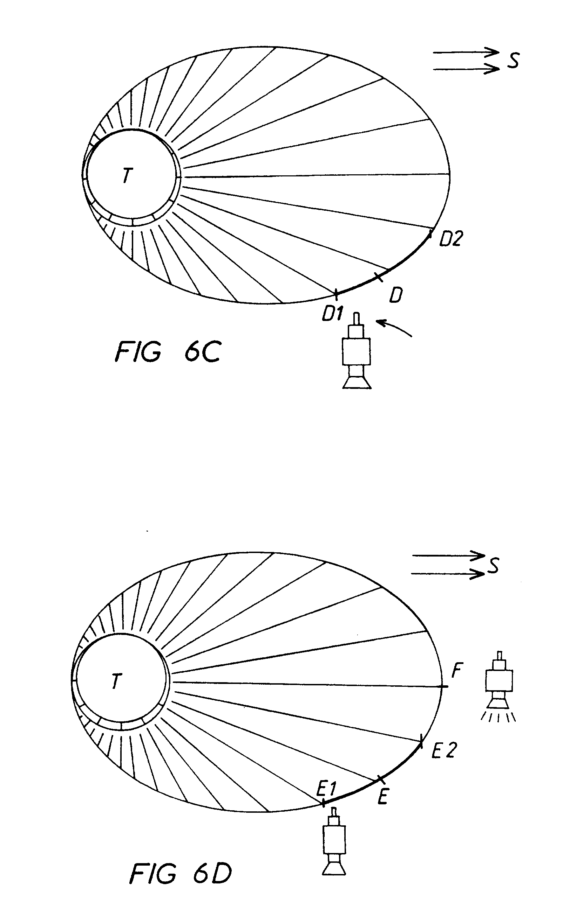

En un point D d'un segment D1-D2, ici choisi au cours de la troisième orbite (voir figure 6C) on modifie l'ascension droite β de l'axe V-V de façon à placer le satellite dans l'attitude voulue pour la mise à feu du moteur d'apogée (voir figure 7). Il est à noter que cette modification de l'ascension droite est observable donc maîtrisable à l'aide des senseurs solaires uniquement, et n'est donc pas affectée par la proximité de la configuration d'alignement Terre-Satellite-Soleil. La déclinaison α n'est, quant à elle, plus observable de façon précise dès que cette modification est effectuée en D, mais, grâce à la calibration préalable des tuyères, on sait effectuer cette modification en restant aussi près que possible de la déclinaison ajustée en C'.

En un point E d'un segment E1-E2 choisi dans la 4è orbite (voir la figure 6D) avant la manoeuvre d'apogée, on peut si on le désire ou si cela paraît utile, affiner l'ascension droite de l'axe V-V à partir des mesures obtenues par les détecteurs solaires.

Le satellite est alors en une attitude appropriée pour la mise à feu du moteur d'apogée en F à proximité du 4è apogée, selon l'axe W-W confondu avec l'axe V-V.

De manière avantageuse le décalage Δ β de l'ascension droite entre l'attitude visée pour la manoeuvre d'apogée et l'attitude intermédiaire est comprise entre 0-1° et 20°, par exemple choisie égale à 10°environ (entre 8 et 12° par exemple). Le passage C en l'attitude intermédiaire est alors effectué entre 90° et 180° d'anomalie vraie, tandis que l'ajustement de α se fait entre 120° et 180° d'anomalie vraie ; à la figure 6B ce passage C et l'ajustement C' de déclinaison ont lieu entre 30° et 10° avant le 2è apogée.

La calibration des tuyères en B est avantageusement effectuée entre 90° et 180° d'anomalie vraie (à la figure 6A entre 40° et 10° avant le premier apogée).

Le passage D à l'attitude finale se fait avantageusement entre 120° et 180° d'anomalie vraie (à la figure 6C entre 30° et 10° avant le 3è apogée).

L'éventuel affinage ultime E de l'ascension droite se fait avantageusement entre 30° et 10° avant le 4è et dernier apogée.

On notera que dans l'exemple décrit à propos des figures 6A à 6D toutes les modifications de α et de β ont lieu peu avant un apogée. En choisissant un décalage de β de sens contraire on pourrait situer au moins les étapes C et C' après un apogée.

Des simulations ont permis de montrer que l'invention permet d'approcher l'attitude optimale pour la manoeuvre d'apogée à moins de ± 0,8° près.

## Revendications

1. Procédé de détermination et de contrôle de l'attitude d'un satellite (1) muni de tuyères (4) de correction d'attitude et de détecteurs terrestres (5) et solaires (6), stabilisé par autorotation autour d'un axe V-V, préalablement à son passage d'une orbite elliptique de transfert (7) à une orbite circulaire géostationnaire lors d une manoeuvre d'apogée, cette attitude étant définie par rapport a un repère inertiel X Y Z dont l'axe Z est dirigé vers le Nord géographique, par une déclinaison α entre l'axe V-V et le plan X Y et par une ascension droite β entre la projection de l'axe V-V dans le plan X Y et l'axe X, caractérisé en ce que, après l'injection du satellite par un lanceur sur l'orbite de transfert au périgée de celle-ci, avec une attitude initiale proche d'une attitude finale prédéterminée visée par la manoeuvre d'apogée :
- on calibre les tuyères dans une position orbitale décalée de l'apogée à l'aide des détecteurs solaires et terrestres en sorte de savoir ensuite modifier l'ascension droite β sans perturber la déclinaison α,
- on modifie (C) l'ascension droite β du satellite en sorte de lui donner une attitude intermédiaire telle que le champ de vision des détecteurs terrestres (5) vienne intercepter la Terre pour une position du satellite sur l'orbite de transfert décalée d'au moins 10 degrés par rapport à l'apogée,
- on mesure la déclinaison a de l'axe de rotation du satellite, puis on l'ajuste (C') à la valeur souhaitée pour la manoeuvre d'apogée,
- en maintenant cette déclinaison constante compte tenu de l'étape de calibration, on ajuste (D) l'ascension droite à partir des mesures des détecteurs solaires en sorte d'amener le satellite dans son attitude finale, et
- on commande la manoeuvre d'apogée.

2. Procédé selon la revendication 1, caractérisé en ce que l'écart d'ascension droite β entre l'attitude initiale et l'attitude intermédiaire est compris entre 1 et 20.

3. Procédé selon la revendication 1 ou la revendication 2, caractérisé en ce que dans l'attitude intermédiaire, la position du satellite, lorsque ledit champ de vision des détecteurs terrestres intercepte la Terre, se trouve en avance de 10 à 30° environ sur l'apogée.

4. Procédé selon l'une quelconque des revendications 1 à 3, caractérisé en ce que, la manoeuvre d'apogée étant prévue pour le 4è passage du satellite à l'apogée, on amène le satellite dans son attitude intermédiaire (C) avant le second passage du satellite à l'apogée de son orbite de transfert.

5. Procédé selon l'une quelconque des revendications 1 à 4, caractérisé en ce qu'on amène (C) le satellite dans son attitude intermédiaire en une position du satellite (1) sur son orbite (7) située entre 170° et 10° environ en avance sur l'apogée.

6. Procédé selon l'une quelconque des revendications 1 à 5, caractérisé en ce qu'on ajuste (C') la déclinaison α du satellite en une position située entre 10 et 30° avant l'apogée.

7. Procédé selon l'une quelconque des revendications 1 à 6, caractérisé en ce que la manoeuvre d'apogée étant prévue lors du 4è passage à l'apogée, on ajuste (C') cette déclinaison avant le second passage du satellite à l'apogée.

8. Procédé selon l'une quelconque des revendications 1 à 7, caractérisé en ce qu'on amène (D) le satellite dans son attitude finale en une position de celui-ci sur l'orbite de transfert située entre 10 et 30° avant l'apogée.

9. Procédé selon l'une quelconque des revendications 1 à 8, caractérisé en ce que la manoeuvre d'apogée étant prévue pour le 4è passage à l'apogée, on amène (D) le satellite dans son attitude finale avant le 3è passage du satellite à l'apogée.

10. Procédé selon l'une quelconque des revendications 1 à 9, caractérisé en ce que, la manoeuvre d'apogée étant prévue pour le 4è passage du satellite à l'apogée, on commande (E) un ajustement ultime de l'ascension droite β entre 30° et 10° avant ce 4è passage.

## Claims

1. Method of determining and controlling the attitude of a satellite (1) equipped with attitude-correction thrusters (4) and terrestrial (5) and solar (6) sensors, spin-stabilised about an axis V-V, prior to passing from an elliptical transfer orbit (7) to a circular geostationary orbit by means of an apogee manoeuvre, this attitude being defined, with respect to an inertial frame of reference X Y Z, the Z axis of which is directed towards geographic North, by a declination α between the axis V-V and the plane X Y and by right ascension β between the projection of the axis V-V onto the plane X Y and the X axis, characterised in that, after the satellite is put by a launch vehicle into the transfer orbit at its perigee, with an initial attitude approximating a predetermined final attitude sought by the apogee manoeuvre:
- the thrusters are calibrated in an orbital position offset from the apogee by means of solar and terrestrial sensors so that it is then possible to modify the right ascension β without disturbing the declination α,
- the right ascension β of the satellite is modified (C) so as to confer on it an intermediate attitude such that the field of vision of the terrestrial sensors (5) intercepts the Earth for a position of the satellite in the transfer orbit offset by at least 10 degrees with respect to the apogee,
- the declination α of the rotation axis of the satellite is measured and then adjusted (C') to the value required for the apogee manoeuvre,
- keeping this declination constant, having regard to the calibration stage, the right ascension is adjusted (D) on the basis of the solar sensor measurements so as to bring the satellite into its final attitude, and
- the apogee manoeuvre is initiated.

2. Method according to Claim 1, characterised in that the difference in right ascension β between the initial attitude and the intermediate attitude is between 1° and 20°.

3. Method according to Claim 1 or Claim 2, characterised in that, in the intermediate attitude, the position of the satellite, when the said field of vision of the terrestrial sensors intercepts the Earth, is approximately 10° to 30° ahead of the apogee.

4. Method according to any one of Claims 1 to 3, characterised in that, the apogee manoeuvre being scheduled for the fourth passage of the satellite through the apogee, the satellite is brought into its intermediate attitude (C) before the second passage of the satellite through the apogee of its transfer orbit.

5. Method according to any one of Claims 1 to 4, characterised in that the satellite is brought (C) into its intermediate attitude at a position of the satellite (1) in its orbit (7) situated between 170° and 10°, approximately, ahead of the apogee.

6. Method according to any one of Claims 1 to 5, characterised in that the declination α of the satellite is adjusted (C') at a position situated between 10° and 30° before the apogee.

7. Method according to any one of Claims 1 to 6, characterised in that, the apogee manoeuvre being scheduled for the fourth passage through the apogee, this declination is adjusted (C') before the second passage of the satellite through the apogee.

8. Method according to any one of Claims 1 to 7, characterised in that the satellite is brought (D) into its final attitude at a position of the satellite in the transfer orbit situated between 10° and 30° before the apogee.

9. Method according to any one of Claims 1 to 8, characterised in that, the apogee manoeuvre being scheduled for the fourth passage through the apogee, the satellite is brought (D) into its final attitude before the third passage of the satellite through the apogee.

10. Method according to any one of Claims 1 to 9, characterised in that, the apogee manoeuvre being scheduled for the fourth passage of the satellite through the apogee, a final adjustment of the right ascension β is initiated (E) between 30° and 10° before this fourth passage.

## Patentansprüche

1. Verfahren zur Bestimmung und zur Steuerung der Lage eines mit Lagekorrekturdüsen (4), Erddetektoren (5) und Solardetektoren (6) ausgerüsteten und durch Autorotation um eine Achse V-V stabilisierten Satelliten (1) vor seinem Übergang von einer elliptischen Übergangsbahn (7) in eine kreisförmige geostationäre Umlaufbahn bei einem Apogäumsmanöver, wobei diese Lage bezüglich eines Trägheitsbezugssystems X Y Z, dessen Achse Z in der geographischen Nordrichtung gerichtet ist, durch eine Deklination α zwischen der Achse V-V und der Ebene X Y und durch eine Rektaszension β zwischen der Projektion der Achse V-V auf die Ebene X Y und der Achse X definiert ist, dadurch gekennzeichnet, daß nach Beförderung des Satelliten durch eine Startrakete in die Übergangsbahn an deren Perigäum mit einer Anfangslage, die nahe bei einer vorbestimmten, für das Apogäumsmanöver vorgesehenen endgültigen Lage ist,
- die Düsen in einer bezüglich des Apogäums versetzten Orbitalstellung mit Hilfe von Solar- und Erddetektoren kalibriert werden, so daß anschließend die Rektaszension β ohne Störung der Deklination α geändert werden kann,
- die Rektaszension β des Satelliten so geändert wird, daß ihm eine Zwischenlage verliehen wird, in der die Erde bei einer um wenigstens 10° bezüglich des Apogäums versetzten Stellung des Satelliten auf der Übergangsbahn im Blickfeld der Erddetektoren (5) ist (C),
- die Deklination α der Drehachse des Satelliten gemessen wird und dann auf den für das Apogäumsmanöver gewünschten Wert eingestellt wird (C'),
- indem diese Deklination angesichts des Kalibrierungsschritts konstant gehalten wird, die Rektaszension ausgehend von Messungen der Solardetektoren eingestellt wird (D), so daß der Satellit in seine endgültige Lage gebracht wird, und
- das Apogäumsmanöver ausgelöst wird.

2. Verfahren nach Anspruch 1, dadurch gekennzeichnet, daß die Abweichung der Rektaszension β zwischen der Anfangslage und der Zwischenlage 1 bis 20 beträgt.

3. Verfahren nach Anspruch 1 oder 2, dadurch gekennzeichnet, daß die Stellung des Satelliten in der Zwischenlage, wenn die Erde im Blickfeld der Erddetektoren liegt, sich etwa 10 bis 30° vor dem Apogäum befindet.

4. Verfahren nach einem der Ansprüche 1 bis 3, dadurch gekennzeichnet, daß, wenn das Apogäumsmanöver bei dem vierten Durchgang des Satelliten durch das Apogäum vorgesehen ist, der Satellit in seine Zwischenlage vor seinem zweiten Durchgang durch das Apogäum seiner Übergangsbahn gebracht wird (C).

5. Verfahren nach einem der Ansprüche 1 bis 4, dadurch gekennzeichnet, daß der Satellit in seine Zwischenlage in einer Stellung des Satelliten (1) auf seiner Bahn (7), die etwa 170° bis 10° vor dem Apogäum liegt, gebracht wird (C).

6. Verfahren nach einem der Ansprüche 1 bis 5, dadurch gekennzeichnet, daß die Deklination α des Satelliten in einer Stellung, die 10 bis 30° vor dem Apogäum liegt, eingestellt wird (C').

7. Verfahren nach einem der Ansprüche 1 bis 6, dadurch gekennzeichnet, daß, wenn das Apogäumsmanöver bei dem vierten Durchgang durch das Apogäum vorgesehen ist, diese Deklination vor dem zweiten Durchgang des Satelliten durch das Apogäum eingestellt wird (C').

8. Verfahren nach einem der Ansprüche 1 bis 7, dadurch gekennzeichnet, daß der Satellit in seine endgültige Lage in einer Stellung des Satelliten auf der Übergangsbahn, die 10 bis 30° vor dem Apogäum liegt, gebracht wird (D).

9. Verfahren nach einem der Ansprüche 1 bis 8, dadurch gekennzeichnet, daß, wenn das Apogäumsmanöver bei dem vierten Durchgang durch das Apogäum vorgesehen ist, der Satellit in seine endgültige Lage vor dem dritten Durchgang durch das Apogäum gebracht wird (D).

10. Verfahren nach einem der Ansprüche 1 bis 9, dadurch gekennzeichnet, daß, wenn das Apogäumsmanöver bei dem vierten Durchgang des Satelliten durch das Apogäum vorgesehen ist, eine Endeinstellung der Rektaszension β 30° bis 10° vor diesem vierten Durchgang bewirkt wird (E).
